# EUROPEAN PATENT SPECIFICATION

(11) **EP 3 902 448 B1**
(45) Date of publication and mention of the grant of the patent: **10.08.2022**
(21) Application number: 19836810.2
(22) Date of filing: 27.12.2019
(51) Int. Cl.: A47J 31/057, A47J 31/06, A47J 31/52

(54) **A HOT BEVERAGE PREPARATION MACHINE**
MASCHINE ZUR ZUBEREITUNG HEISSER GETRÄNKE
MACHINE DE PRÉPARATION DE BOISSONS CHAUDES

(30) Priority: 27.12.2018 TR 201820654
(43) Date of publication of application: 03.11.2021
(73) Proprietor: Arçelik Anonim Sirketi, 34445 Istanbul (TR)
(72) Inventor: MUTLUDOGAN, Mehmet, 34950 ISTANBUL (TR); OZBEK, Hale, 34950 ISTANBUL (TR); OZTURK, Tansel, 34950 ISTANBUL (TR); TOSUN, Isa, 34950 ISTANBUL (TR); KAYISDAG, Varol, 34950 ISTANBUL (TR)
(86) International application number: PCT/EP2019/087091
(87) International publication number: WO 2020/136251

(56) References cited:
- WO-A2-2015/016800
- US-A1- 2015 182 063
- US-B1- 6 439 105

## Description

The present invention relates to a hot beverage preparation machine for automatically preparing beverages.

In hot beverage preparation machines, the water filled into the water reservoir is heated by a water heater and is transferred to the brewing chamber containing raw beverage material to be prepared. The brewing process is performed in the brewing chamber as a result of the interaction between the raw beverage material and water. The brewed beverage is afterwards transferred into a pot and served. The period of time the raw beverage material interacts with the water is one of the important parameters which defines the brew strength, hence the taste of the beverage. In the state of the art, machines are known which carry out brewing process for certain periods of time as per user selection. After staying in the brewing chamber for a certain period of time, the beverage is transferred into the pot. Thus, the taste of the beverage remains the same and fresh after brewing. In the hot beverage preparation machine, tea, coffee or various herbal teas can be prepared as per user preference. However, since the brewing process is different for different types of beverages, the user may encounter inconvenience in use.

In the state of the art International Patent Application No. WO2015150611, a tea and coffee preparation machine is disclosed. Document US 6 439 105 B1 discloses a hot beverage preparation machine comprising a body; a water reservoir wherein water is filled; a water heater enabling the water in the water reservoir to be heated; a brewing chamber wherein the raw material of the beverage to be prepared is put and whereto the water heated in the water reservoir is transferred, wherein the brewing process is performed as a result of the interaction between the raw beverage material and water. The brewing chamber can be selectively mounted in one of two directions at the body, for preparing either tea or coffee. A sensor is provided on the housing and senses the direction of the mounted brewing chamber. This information is sent to a control unit on the beverage preparation machine. The control unit determines which beverage is to be made and instructs the components of the beverage preparation machine accordingly.

The aim of the present invention is the realization of a hot beverage preparation machine which provides ease of utilization.

The hot beverage preparation machine realized in order to attain the aim of the present invention and explicated in the claims, comprises a body; a water reservoir which is placed onto the body and wherein the brewing water is heated; a brewing chamber wherein the brewing process is performed as a result of the interaction between raw beverage material and water; a cover which cuts off the contact between the brewing chamber and the outer environment; a housing which is situated on the body; and a pot which is situated on the housing so as to allow the beverage brewed in the brewing chamber to be distilled therein. When the brewing process is completed, the hot beverage is distilled from the brewing chamber to the pot and separated from the raw beverage material. Thus, the taste of the beverage obtained momentarily during the brewing process is kept for a longer time and the beverage is prevented from getting stale.

The hot beverage preparation machine of the present invention comprises a first brewing receptacle wherein raw material of tea is added and a second brewing receptacle wherein raw material of coffee is added. Since the ideal brewing processes for tea and coffee are different from each other, different brewing receptacles are used in order to obtain quality beverage. The brewing receptacle placed into the brewing chamber is identified by a control unit. The user is provided with brewing recommendations depending on the identified receptacle type.

In an embodiment of the present invention, the hot beverage preparation machine comprises the first brewing receptacle and the second brewing receptacle which have different forms. While the first brewing receptacle is in the form of a cylinder, the second brewing receptacle is in the form of a cone. By means of the conical form of the second brewing receptacle, the water passes and seeps through the entire raw material of coffee. Consequently, a quality brewing process is performed.

In an embodiment of the present invention, the hot beverage preparation machine comprises a sensor which is provided on the brewing chamber. By means of the different forms of the first brewing receptacle and the second brewing receptacle, only one of the brewing receptacles triggers the sensor. Depending on the information received from the sensor, the control unit detects the brewing receptacle and determines the type of beverage.

In an embodiment of the present invention, the hot beverage preparation machine comprises the first brewing receptacle and the second brewing receptacle which have different weights and the control unit which detects the brewing receptacle depending on the weight. The control unit comprises a weight sensor.

In an embodiment of the present invention, the hot beverage preparation machine comprises the first brewing receptacle which is produced from metal and the second brewing receptacle which is produced from plastic. Thus, the weights of the first brewing receptacle and the second brewing receptacle are configured to be different.

In an embodiment of the present invention, the hot beverage preparation machine comprises a code which is provided on the first brewing receptacle or the second brewing receptacle, a camera for reading the code and the control unit which provides the identification of the first brewing receptacle and the second brewing receptacle depending on the information received from the camera. The code is read by means of the camera. Depending on the information read from the code, the control unit determines the type of beverage.

In an embodiment of the present invention, the hot beverage preparation machine comprises a magnet which is provided on the first brewing receptacle or the second brewing receptacle, a conductivity sensor for detecting the magnet, and the control unit which provides the identification of the first brewing receptacle and the second brewing receptacle depending on the information received from the conductivity sensor. By means of the magnet, the control unit provides the identification of the brewing receptacle.

In an embodiment of the present invention, the hot beverage preparation machine comprises a control panel which is provided on the body. By means of the control panel, a menu corresponding to the type of beverage is offered to the user depending on the information received from the control unit. Thus, the user can make selection easily.

By means of the present invention, a hot beverage preparation machine is realized, wherein the type of beverage is identified by means of different brewing receptacles for receiving the raw material of beverage and wherein ease of utilization is provided by offering a proper menu to the user.

The hot beverage preparation machine realized in order to attain the aim of the present invention is illustrated in the attached figures, where:

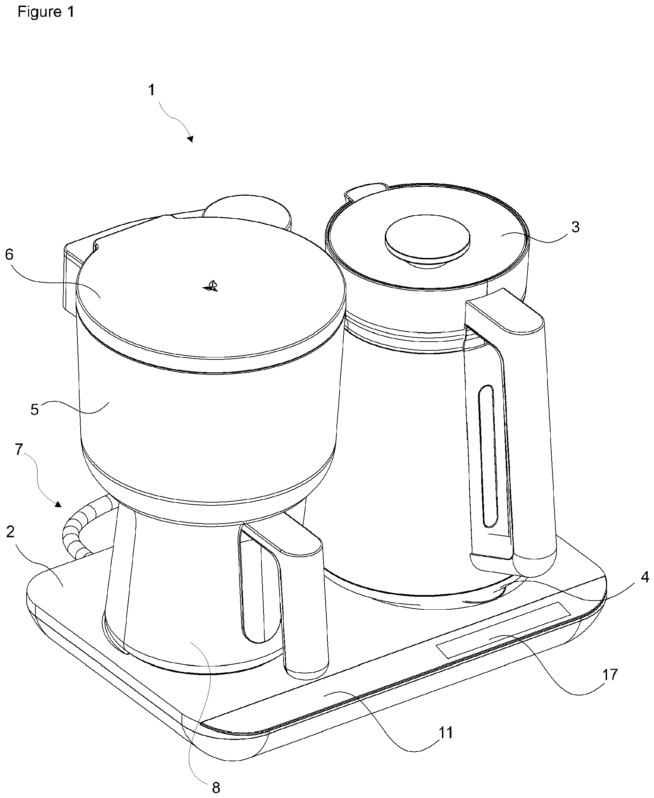

Figure 1 - is the perspective view of the hot beverage preparation machine.

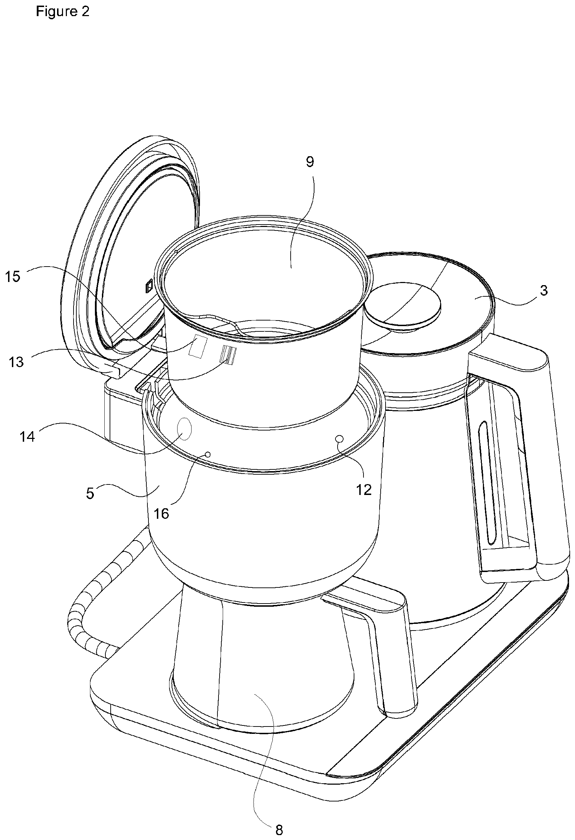

Figure 2 - is the perspective view of the first brewing receptacle and the hot beverage preparation machine.

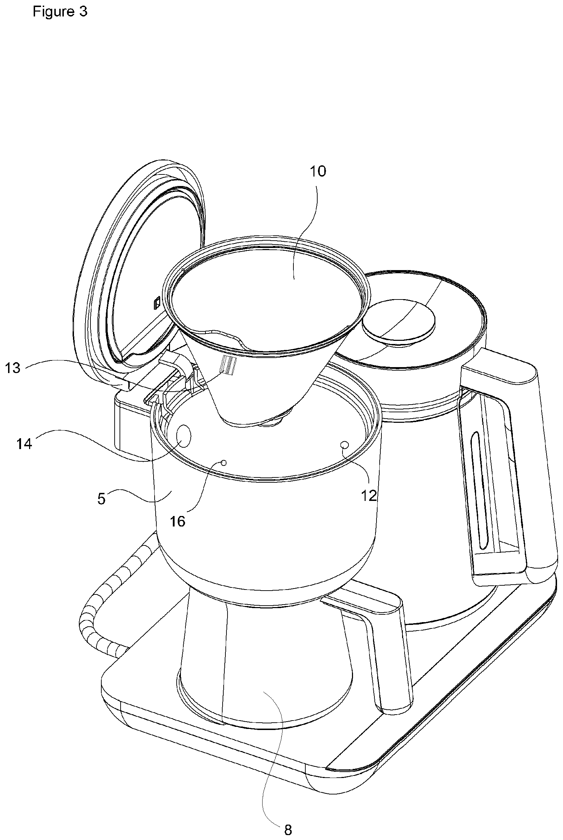

Figure 3 - is the perspective view of the second brewing receptacle and the hot beverage preparation machine.

The elements illustrated in the figures are numbered as follows:
- 1.: Hot beverage preparation machine
- 2.: Body
- 3.: Water reservoir
- 4.: Water heater
- 5.: Brewing chamber
- 6.: Cover
- 7.: Housing
- 8.: Pot
- 9.: First brewing receptacle
- 10.: Second brewing receptacle
- 11.: Control unit
- 12.: Sensor
- 13.: Code
- 14.: Camera
- 15.: Magnet
- 16.: Conductivity sensor
- 17.: Control panel

The hot beverage preparation machine (1) comprises a body (2); a water reservoir (3) wherein water is filled; a water heater (4) enabling the water in the water reservoir (3) to be heated; a brewing chamber (5) wherein the raw material of the beverage to be prepared is put and whereto the water heated in the water reservoir (3) is transferred, wherein the brewing process is performed as a result of the interaction between the raw beverage material and water; a cover (6) for isolating the brewing chamber (5) from the outer environment; a housing (7) which is situated on the body (2), under the brewing chamber (5); and a pot (8) which is placed into the housing (7), the top surface thereof being at least partially open and whereto the beverage brewed in the brewing chamber (5) is transferred. The raw material of the beverage is put into the brewing chamber (5) by the user. By taking the water boiled by means of the water heater (4) into the brewing chamber (5), the beverage is brewed for a period of time. The prepared beverage at the completion of the brewing process is transferred from the brewing chamber (5) into the pot (8).

The hot beverage preparation machine (1) of the present invention comprises a control unit (11) which provides the identification of the first brewing receptacle (9) or the second brewing receptacle (10), both detachably mounted into the brewing chamber (5), and which offers brewing recommendations to the user depending on the identified type of receptacle (9 or 10). The first brewing receptacle (9) is suitable for brewing quality tea while the second brewing receptacle (10) is suitable for brewing coffee. By means of the control unit (11), the type of brewing receptacle (9 or 10), hence the type of beverage to be prepared, can be identified.

In an embodiment of the present invention, the hot beverage preparation machine (1) comprises the first brewing receptacle (9) and the second brewing receptacle (10) which have different forms. Depending on the type of beverage, the user selects a different brewing receptacle (9, 10). Thus, the brewing process is realized according to the type of beverage.

In an embodiment of the present invention, the hot beverage preparation machine (1) comprises the first brewing receptacle (9) in the form of a cylinder and the second brewing receptacle (10) in the form of a cone. By means of the cylindrical form of the first brewing receptacle (9), tea leaves are properly distributed and wetted. By means of the conical form of the second brewing receptacle (10), the water seeps through the raw material of coffee. Thus, the entire raw material of coffee is homogeneously wetted, ensuring the release of the coffee aroma into the water.

In an embodiment of the present invention, the hot beverage preparation machine (1) comprises a sensor (12) which is provided on the brewing chamber (5) and which is triggered by the first brewing receptacle (9) or the second brewing receptacle (10) placed into the brewing chamber (5), and the control unit (11) which provides the identification of the first brewing receptacle (9) or the second brewing receptacle (10) as the sensor (12) is triggered. The sensor (12) is triggered only by the first brewing receptacle (9) or the second brewing receptacle (10). Thus, when the sensor (12) is triggered, the control unit (11) identifies the brewing receptacle (9 or 10), hence the type of beverage to be prepared.

In an embodiment of the present invention, the hot beverage preparation machine (1) comprises the first brewing receptacle (9) and the second brewing receptacle (10) which have different weights and the control unit (11) which detects the first brewing receptacle (9) and the second brewing receptacle (10) depending on the weight difference. The first brewing receptacle (9) and the second brewing receptacle (10) have different weights, and said weights are predefined on the control unit (11) by the producer. Thus, the control unit (11) identifies the brewing receptacle (9 or 10) placed, hence the type of beverage.

In an embodiment of the present invention, the hot beverage preparation machine (1) comprises the first brewing receptacle (9) which is produced from metal and the second brewing receptacle (10) which is produced from plastic. By means of the metal first brewing receptacle (9) and the plastic second brewing receptacle (10), the difference of weight is ensured.

In an embodiment of the present invention, the hot beverage preparation machine (1) comprises a code (13) which is provided on the first brewing receptacle (9) and/or the second brewing receptacle (10), a camera (14) for reading the code and the control unit (11) which detects the image on the camera (14) and provides the identification of the first brewing receptacle (9) and the second brewing receptacle (10). By means of the code (13), the brewing receptacles (9 and 10) are separated from each other. The code (13) can be QR code, barcode or any code (13) containing different numbers and shapes. The code (13) is read by the camera (14) and identified by the control unit (11).

In an embodiment of the present invention, the hot beverage preparation machine (1) comprises at least one magnet (15) which is provided on the first brewing receptacle (9) or the second brewing receptacle (10), a conductivity sensor (16) for detecting magnetic force, and the control unit (11) which provides the identification of the first brewing receptacle (9) and the second brewing receptacle (10) depending on the information received from the conductivity sensor (16). The magnet (15) provided on the first brewing receptacle (9) or the second brewing receptacle (10) is detected by the conductivity sensor (16). Thus, the control unit (11) determines the type of the brewing receptacle (9 or 10).

In an embodiment of the present invention, the hot beverage preparation machine (1) comprises a control panel (17) which is provided on the body (2), which enables the user to control brewing processes and which offers a beverage menu corresponding to the brewing receptacle (9 or 10) to the user depending on the information received from the control unit (11). The beverage menu determined by the control unit (11) is offered to the user by means of the control panel (17). Thus, the user is prevented from having difficulty in making a selection from a large number of options.

By means of the present invention, a hot beverage preparation machine (1) is realized, wherein different brewing receptacles (9 or 10) suitable for different types of beverages are used and wherein the user is offered a beverage menu corresponding to the brewing receptacle (9 or 10). Thus, quality of beverage is improved and ease of use is provided.

## Claims

1. A hot beverage preparation machine (1) comprising
- a body (2);
- a water reservoir (3) wherein water is filled;
- a water heater (4) enabling the water in the water reservoir (3) to be heated;
- a brewing chamber (5) wherein the raw material of the beverage to be prepared is put and whereto the water heated in the water reservoir (3) is transferred, wherein the brewing process is performed as a result of the interaction between the raw beverage material and water;
- a cover (6) for isolating the brewing chamber (5) from the outer environment;
- a housing (7) which is situated on the body (2), under the brewing chamber (5); and
- a pot (8) which is placed into the housing (7), the top surface thereof being at least partially open and whereto the beverage brewed in the brewing chamber (5) is transferred;
**characterized by**
- a first brewing receptacle (9) which can be detachably mounted into the brewing chamber (5) and wherein raw material of tea is added,
- a second brewing receptacle (10) wherein raw material of coffee is added, and
- a control unit (11) which is adapted to provide the identification of the first brewing receptacle (9) or the second brewing receptacle and which is adapted to offer brewing recommendations to the user depending on the identified type of receptacle (9 or 10).

2. A hot beverage preparation machine (1) as in Claim 1, **characterized by** the first brewing receptacle (9) and the second brewing receptacle (10) which have different forms.

3. A hot beverage preparation machine (1) as in Claim 1, **characterized by** the first brewing receptacle (9) in the form of a cylinder and the second brewing receptacle (10) in the form of a cone.

4. A hot beverage preparation machine (1) as in Claim 2 or Claim 3, **characterized by** a sensor (12) which is provided on the brewing chamber (5) and which is triggered by the first brewing receptacle (9) or the second brewing receptacle (10) placed into the brewing chamber (5), and the control unit (11) which provides the identification of the first brewing receptacle (9) or the second brewing receptacle (10) as the sensor (12) is triggered.

5. A hot beverage preparation machine (1) as in any one of the above claims, **characterized by** the first brewing receptacle (9) and the second brewing receptacle (10) which have different weights and the control unit (11) which detects the first brewing receptacle (9) and the second brewing receptacle (10) depending on the weight difference.

6. A hot beverage preparation machine (1) as in Claim 4, **characterized by** the first brewing receptacle (9) which is produced from metal and the second brewing receptacle (10) which is produced from plastic.

7. A hot beverage preparation machine (1) as in any one of the above claims, **characterized by** a code (13) which is provided on the first brewing receptacle (9) and/or the second brewing receptacle (10), a camera (14) for reading the code and the control unit (11) which detects the image on the camera (14) and provides the identification of the first brewing receptacle (9) and the second brewing receptacle (10).

8. A hot beverage preparation machine (1) as in any one of the above claims, **characterized by** at least one magnet (15) which is provided on the first brewing receptacle (9) or the second brewing receptacle (10), a conductivity sensor (16) for detecting magnetic force, and the control unit (11) which provides the identification of the first brewing receptacle (9) and the second brewing receptacle (10) depending on the information received from the conductivity sensor (16).

9. A hot beverage preparation machine (1) as in any one of the above claims, **characterized by** a control panel (17) which is provided on the body (2), which enables the user to control brewing processes and which offers a beverage menu corresponding to the brewing receptacle (9 or 10) to the user depending on the information received from the control unit (11).

## Patentansprüche

1. Eine Heißgetränkezubereitungsmaschine (1) **umfasst**
- einen Körper (2);
- einen Wasserbehälter (3), in dem Wasser gefüllt wird;
- einen Wassererhitzer (4), der es ermöglicht, das Wasser im Wasserbehälter (3) zu erhitzen;
- eine Brühkammer (5), in die der Rohstoff des zuzubereitenden Getränks gegeben wird und in die das im Wasserbehälter (3) erhitzte Wasser überführt wird, wobei der Brühprozess als Ergebnis der Wechselwirkung zwischen dem Getränkerohmaterial und Wasser durchgeführt wird;
- eine Abdeckung (6) zum Isolieren der Brühkammer (5) von der äußeren Umgebung;
- ein Gehäuse (7), das sich auf dem Körper (2) unter der Brühkammer (5) befindet; und
- eine Kanne (8), die in das Gehäuse (7) eingesetzt ist, deren obere Oberfläche mindestens teilweise offen ist und in die das in der Brühkammer (5) gebrühte Getränk überführt wird;
**gekennzeichnet durch**
- einen ersten Brühbehälter (9), der abnehmbar in die Brühkammer (5) montierbar ist und in dem Teerohstoff zugegeben wird,
- einen zweiten Brühbehälter (10), in den Kaffeerohstoff gegeben wird, und
- durch eine Steuereinheit (11), die angepasst ist, die Identifizierung des ersten Brühbehälters (9) oder des zweiten Brühgefäßes bereitzustellen, und Brühempfehlungen für den Benutzer in Abhängigkeit von dem identifizierten Brühbehälter (9 oder 10) anzubieten.

2. Eine Heißgetränkezubereitungsmaschine (1), wie in Anspruch 1 aufgeführt, **ist dadurch gekennzeichnet, dass** der erste Brühbehälter (9) und der zweite Brühbehälter (10) unterschiedliche Formen aufweisen.

3. Eine Heißgetränkezubereitungsmaschine (1), wie in Anspruch 1 aufgeführt, **ist dadurch gekennzeichnet, dass** das erste Brühbehälter (9) in Form eines Zylinders und das zweite Brühbehälter (10) in Form eines Kegels ist.

4. Eine Heißgetränkezubereitungsmaschine (1), wie in Anspruch 2 oder 3 aufgeführt, **ist dadurch gekennzeichnet, dass** sie einen an der Brühkammer (5) vorgesehenen Sensor (12) aufweist, der durch das in die Brühkammer (5) eingesetzte erste Brühbehälter (9) oder das zweite Brühbehälter (10) ausgelöst wird, und eine Steuereinheit (11) umfasst, die die Identifikation des ersten Brühbehälter (9) oder des zweiten Brühbehälter (10) als Sensor (12) bereitstellt, wenn er angesteuert wird.

5. Eine Heißgetränkezubereitungsmaschine (1), wie in den vorherigen Ansprüchen aufgeführt, **ist dadurch gekennzeichnet, dass** das erste Brühbehälter (9) und das zweite Brühbehälter (10) unterschiedliche Gewichte aufweisen und die Steuereinheit (11) das erste Brühbehälter (9) und das zweite Brühbehälter (10) in Abhängigkeit von der Gewichtsdifferenz erkennt.

6. Eine Heißgetränkezubereitungsmaschine (1), wie in Anspruch 4 aufgeführt, **ist dadurch gekennzeichnet, dass** das erste Brühbehälter (9) aus Metall und das zweite Brühbehälter (10) aus Kunststoff hergestellt ist.

7. Eine Heißgetränkezubereitungsmaschine (1), wie in den vorherigen Ansprüchen aufgeführt, **ist dadurch gekennzeichnet, dass** sie einen Code (13) aufweist, der an dem ersten Brühbehälter (9) und/oder dem zweiten Brühbehälter (10) vorgesehen ist und eine Kamera (14) zum Lesen des Codes und die Steuereinheit (11), die das Bild an der Kamera erfasst (14) und die Identifikation des ersten Brühbehälter (9) und des zweiten Brühbehälter (10) überliefert.

8. Eine Heißgetränkezubereitungsmaschine (1), wie in den vorherigen Ansprüchen aufgeführt, **ist dadurch gekennzeichnet, dass** er mindestens ein Magnet (15) aufweist, der an dem ersten Brühbehälter (9) oder dem zweiten Brühbehälter (10) vorgesehen ist, und einen Leitfähigkeitssensor (16) zum Erfassen einer Magnetkraft, und die Steuereinheit (11), die die Identifizierung des ersten Brühbehälters (9) und des zweiten Brühbehälters (10) in Abhängigkeit von den von dem Leitfähigkeitssensor (16) empfangenen Informationen bereitstellt.

9. Eine Heißgetränkezubereitungsmaschine (1), wie in den vorherigen Ansprüchen aufgeführt, **ist dadurch gekennzeichnet, dass** ein am Körper (2) vorgesehenes Bedienfeld (17) dem Benutzer in Abhängigkeit von den von der Steuereinheit (11) empfangenen Informationen ein dem Brühbehälter (9 oder 10) entsprechendes Getränkemenü anbietet.

## Revendications

1. Une machine de préparation de boissons chaudes (1) **comprenant**
- un corps (2) ;
- un réservoir d'eau (3) dans lequel l'eau est remplie ;
- un chauffe-eau (4) permettant de chauffer l'eau du réservoir d'eau (3) ;
- une chambre d'infusion (5) dans laquelle la matière première de la boisson à préparer est placée et dans laquelle l'eau chauffée dans le réservoir d'eau (3) est transférée, dans laquelle le processus d'infusion est effectué suite à l'interaction entre la matière première du boisson et de l'eau ;
- un couvercle (6) pour isoler la chambre d'infusion (5) de l'environnement extérieur ;
- un boîtier (7) qui est situé sur le corps (2), sous la chambre d'infusion (5) ; et
- un pot (8) qui est placé dans le boîtier (7), la surface supérieure de celui-ci étant au moins partiellement ouverte et dans lequel la boisson infusée dans la chambre d'infusion (5) est transférée ;
**Caractérisé par**
- un premier récipient d'infusion (9) montable de manière amovible dans la chambre d'infusion (5) et dans lequel la matière première du thé est ajoutée,
- un second réceptacle d'infusion (10) dans lequel la matière première du café est ajoutée, et
- une unité de commande (11) adaptée pour fournir l'identification du premier récipient d'infusion (9) ou du second récipient d'infusion et pour proposer des recommandations d'infusion à l'utilisateur en fonction du type de récipient identifié (9 ou 10).

2. Une machine de préparation de boissons chaudes (1) selon la déclaration 1, est **caractérisée en ce que** le premier réceptacle d'infusion (9) et le second réceptacle d'infusion (10) aient des formes différentes.

3. Une machine de préparation de boissons chaudes (1) selon la déclaration 1, est **caractérisée en ce que** le premier réceptacle d'infusion (9) sous la forme d'un cylindre et le second réceptacle d'infusion (10) sous la forme d'un cône.

4. Une machine de préparation de boissons chaudes (1) selon les déclarations 2 et 3, est **caractérisée en ce qu'**un capteur (12) soit prévu sur la chambre d'infusion (5) et déclenché par le premier récipient d'infusion (9) ou le deuxième récipient d'infusion (10) placé dans la chambre d'infusion (5), et l'unité de commande (11) qui assure l'identification du premier récipient d'infusion (9) ou du deuxième récipient d'infusion (10) lorsque le capteur (12) est déclenché.

5. Une machine de préparation de boissons chaudes (1) selon l'une des déclarations précédentes, est **caractérisée en ce que** le premier réceptacle d'infusion (9) et le deuxième réceptacle d'infusion (10) ayant des poids différents et l'unité de commande (11) qui détecte le premier réceptacle d'infusion récipient (9) et le deuxième récipient d'infusion (10) en fonction de la différence de poids.

6. Une machine de préparation de boissons chaudes (1) selon la déclaration 4, est **caractérisée en ce que** le premier récipient d'infusion (9) soit réalisé en métal et le second récipient d'infusion (10) en matière plastique.

7. Une machine de préparation de boissons chaudes (1) selon l'une des déclarations précédentes, est **caractérisée en ce qu'**un code (13) soit prévu sur le premier réceptacle d'infusion (9) et/ou le deuxième réceptacle d'infusion (10), une caméra (14) pour lire le code et l'unité de commande (11) qui détecte l'image sur la caméra (14) et fournit l'identification du premier récipient d'infusion (9) et du deuxième récipient d'infusion (10).

8. Une machine de préparation de boissons chaudes (1) selon l'une des déclarations précédentes, est **caractérisée en ce qu'**au moins un aimant (15) soit prévu sur le premier réceptacle d'infusion (9) ou le second réceptacle d'infusion (10), un capteur de conductivité (16) pour détecter la force magnétique, et l'unité de commande (11) qui fournit l'identification du premier réceptacle d'infusion (9) et du second réceptacle d'infusion (10) en fonction des informations reçues du capteur de conductivité (16).

9. Une machine de préparation de boissons chaudes (1) selon l'une des déclarations précédentes, est **caractérisée en ce qu'**un panneau de commande (17) prévu sur le corps (2), permette à l'utilisateur de contrôler les processus de préparation et propose un menu de boissons correspondant au réceptacle d'infusion (9 ou 10) à l'utilisateur en fonction des informations reçues de l'unité de commande (11).
